# EUROPÄISCHE PATENTSCHRIFT

(11) **EP 4 399 172 B1**
(45) Veröffentlichungstag und Bekanntmachung des Hinweises auf die Patenterteilung: **26.03.2025**
(21) Anmeldenummer: 22772933.2
(22) Anmeldetag: 02.09.2022
(51) Int. Cl.: B66B 29/00

(54) **VERFAHREN UND VORRICHTUNG ZUR ÜBERWACHUNG DES FAHRBETRIEBES EINER PERSONENFÖRDERANLAGE**
METHOD AND DEVICE FOR MONITORING AN OPERATIONAL STATUS OF A PASSENGER TRANSPORT SYSTEM
PROCÉDÉ ET DISPOSITIF DE SURVEILLANCE DU FONCTIONNEMENT D'UNE INSTALLATION DE TRANSPORT DE PERSONNES

(30) Priorität: 10.09.2021 EP 21195902
(43) Veröffentlichungstag der Anmeldung: 17.07.2024
(73) Patentinhaber: INVENTIO AG, 6052 Hergiswil (CH)
(72) Erfinder: BURRI, Jürg, 5042 Hirschthal (CH); KLEEWEIN, Gerhard, 3021 Pressbaum (AT); XING, Jacky, Shanghai, 201815 (CN); WU, Ferry, Shanghai, 201815 (CN); WAGENLEITNER, Georg, 4575 Roßleithen (AT)
(74) Vertreter: Inventio AG
(86) Internationale Anmeldenummer: PCT/EP2022/074440
(87) Internationale Veröffentlichungsnummer: WO 2023/036699

(56) Entgegenhaltungen:
- EP-A1- 1 013 599
- WO-A1-2009/152766
- JP-A- 2008 174 320
- DATABASE WPI Week 200856, Derwent World Patents Index; AN 2008-J61650

## Beschreibung

Die Erfindung betrifft ein Verfahren zur Überwachung des Fahrbetriebes einer oder mehrerer Personenförderanlagen sowie eine Vorrichtung zur Durchführung dieses Verfahrens.

Personenförderanlagen wie Fahrtreppen und Fahrsteige werden beispielsweise in Kaufhäusern und grossen Einkaufscentern, aber auch in Bahnhöfen, U-Bahnstationen und Flughäfen eingesetzt. In den drei letztgenannten Bereichen kann während der Stosszeiten eine erhöhte Unfallgefahr herrschen, wenn in Zeitnot geratene Benutzer andere Benutzer auf den Personenförderanlagen bedrängen. Dadurch können bedrängte Personen auf dem Stufenband der Fahrtreppe oder dem Palettenband des Fahrsteiges stürzen und sich erhebliche Verletzungen zuziehen, wenn das Stufenband oder Palettenband nicht mittels eines Notstopps angehalten wird. Es können auch Situationen eintreten, bei denen eine Verringerung der Geschwindigkeit für die Benutzer vorteilhafter ist als ein Notstopp.

Zur Überwachung dieser Personenförderanlagen werden Videokameras eingesetzt, deren Videosequenzen in Echtzeit auf Bildschirme übertragen werden, die in einem Überwachungsraum angeordnet sind. Vom Überwachungsraum aus werden meistens mehrere Personenförderanlagen durch das Überwachungspersonal überwacht, wobei jeweils eine Gruppe von Personenförderanlagen durch eine einzige Überwachungsperson betreut wird. Zudem überwacht und bedient die Überwachungsperson im Bereich ihrer zugeteilten Gruppe von Personenförderanlagen oft auch die Beleuchtung, den Feuermelder, die Lüftung und gegebenenfalls weitere Einrichtungen wie Sicherheitsschleusen und dergleichen mehr.

Diese hohe Dichte an Überwachungstätigkeiten kann zur raschen Ermüdung der Überwachungsperson und zu deren verminderten Aufmerksamkeit führen. Wenn eine kritische Situation auf einer der Personenförderanlagen eintritt, kann sich durch die verminderte Aufmerksamkeit die kritische Situation verschlechtern und in schweren Fällen zu erheblichen Verletzungen oder schlimmstenfalls zum Tod des betroffenen Benutzers führen.

Um das vorgenannte Problem zu lösen, werden Überwachungsräume so eingerichtet, dass kritische Situationen von Benutzern auf der Personenförderanlage durch die Verarbeitung von Bewegungssequenzaufnahmen mittels Bilderkennung automatisch erkannt werden können. Sobald eine kritische Situation erkannt wird, wird die entsprechende Bewegungssequenzaufnahme auf dem Bildschirm des Überwachungsraums angezeigt. Die Bewegungssequenzaufnahme ist mit einer Identifikationsnummer versehen, so dass die Überwachungsperson sofort erkennen kann, auf welcher Personenförderanlage ihrer Gruppe eine kritische Situation eingetreten ist.

Unterhalb des Bildschirms ist eine gleiche Anzahl von physischen Notausschalter in der entsprechend der Anzahl überwachter Personenförderanlagen angeordnet, wobei jeder Notausschalter mit dem Sicherheitskreis der entsprechenden Personenförderanlage verbunden ist. Sobald eine kritische Situation auftritt, muss das Überwachungsraumpersonal den zugeordneten Notausschalter der in der Bewegungssequenzaufnahme mit der Identifikationsnummer angezeigten Personenförderanlage finden und diesen betätigen.

Dieses Suchen kann die die Notfallreaktionsgeschwindigkeit stark reduzieren, so dass das Eingreifen des Überwachungspersonals zu spät erfolgt. Zudem kann das Überwachungspersonal des Überwachungsraums bei dramatischen Szenen auf der Bewegungssequenzaufnahme in Panik geraten und den falschen Notausschalter drücken, was zu einem Notstopp einer anderen Personenförderanlage führt, die nicht stoppen sollte. Die kritische Situation wird dadurch nicht entschärft und den Benutzern der gestoppten Personenförderanlage werden Unannehmlichkeiten beschert, da eine gestoppte Anlage nicht sofort wieder in Betrieb genommen werden kann.

Die EP 1 013 599 A1, die WO 2009/152766 A1 und die JP 2008 174320 A offenbaren Überwachungssysteme mit Bildsensoren, um den Fahrbetrieb von Fahrtreppen und Fahrsteigen zu überwachen.

Um die vorangehend beschriebenen Probleme zu lösen, besteht die Aufgabe der vorliegenden Erfindung darin, ein Überwachungssystem für eine Personenbeförderungsanlage bereitzustellen, welches dem Überwachungsraumpersonal ermöglicht, sofort und adäquat auf eine kritische Situation zu reagieren, um eine weitere Verschärfung dieser kritischen Situation zu verhindern.

Diese Aufgabe wird gelöst durch ein Verfahren zur Überwachung des Fahrbetriebes einer als Fahrtreppe oder Fahrsteig ausgestalteten Personenförderanlage mittels eines Überwachungssystems gemäss Anspruch 1. Das Überwachungssystem weist ein Gefahrenanalysemodul, ein Interaktionsmodul, ein Steuerungsmodul und mindestens ein Bewegungserfassungsmodul auf. Das Bewegungserfassungsmodul ist auf eine zugeordnete Personenförderanlage gerichtet und kann von dieser elektronisch verarbeitbare Bewegungssequenzaufnahmen erfassen. Mit anderen Worten ausgedrückt, sind ein Bewegungserfassungsmodul oder mehrere Bewegungserfassungsmodule auf eine zugeordnete Personenförderanlage gerichtet und nehmen die auf der Fahrtreppe oder dem Fahrsteig aktuell vorhandenen Vorgänge beziehungsweise Situationen kontinuierlich auf. Als Bewegungserfassungsmodule können Videokameras, Wärmebildkameras, Laserscanner, TOF-Kameras, ein Set von mehreren Sensoren und dergleichen mehr verwendet werden, deren Bewegungssequenzaufnahmen dementsprechend als Videofilmsequenz, Bildsequenz, Wärmebildsequenz, etc. in elektronisch verarbeitbarer Form erfasst werden. Bei der Verwendung von mehreren Bewegungserfassungsmodulen pro Personenförderanlage ist vorzugsweise jeder ein bestimmter Abschnitt beziehungsweise Bereich zugeordnet, so dass nicht die ganze Fahrtreppe oder der ganze Fahrsteig auf einer der Bewegungssequenzaufnahmen sichtbar ist.

Erfindungsgemäss übermittelt das mindestens eine Bewegungserfassungsmodul seine Bewegungssequenzaufnahmen in Echtzeit an das Interaktionsmodul und an das Gefahrenanalysemodul. Das Interaktionsmodul dient der Interaktion mit dem Überwachungspersonal und weist mindestens einen Bildschirm auf, auf dem die Bewegungssequenzaufnahmen angezeigt beziehungsweise optisch dargestellt werden können.

Parallel zur Darstellung der Bewegungssequenzaufnahmen auf dem Bildschirm, werden diese Bewegungssequenzaufnahmen im Gefahrenanalysemodul mittels Analysealgorithmen auf kritische Situationen für Benutzer der Personenförderanlage untersucht. Mit anderen Worten werden aus dem technischen Gebiet der Überwachungselektronik bekannte, automatisierte Erkennungsprozesse beziehungsweise Analyseverfahren wie Bildanalyseverfahren und entsprechende Algorithmen, Bewegungsanalyseverfahren und entsprechende Algorithmen, statistische und heuristische Auswerteverfahren und dergleichen mehr verwendet, um von üblichen Bewegungsabläufen abweichende beziehungsweise atypische Bewegungsabläufe der Benutzer zu erkennen. Je nach Bewegungsablauf eines abweichenden Bewegungsvorganges kann das Gefahrenanalysemodul eine kritische Situation annehmen. Eine mögliche Ausführung dieses automatisierten Beurteilungsprozesses wird weiter unten ausführlicher beschrieben. Sobald eine kritische Situation erkannt ist, sendet das Gefahrenanalysemodul ein Warnsignal an das Interaktionsmodul.

Aufgrund des Warnsignals hebt das Interaktionsmodul die auf dem Bildschirm angezeigte und dem Warnsignal zugehörende Bewegungssequenzaufnahme optisch und/oder akustisch hervor und generiert auf dem Bildschirm ein Bestätigungseingabefeld. Eine optische Hervorhebung kann dadurch erfolgen, dass die dem Warnsignal zugeordnete Bewegungssequenzaufnahme auf dem Bildschirm mittels einer Zoomfunktion vergrössert dargestellt wird, sobald das Warnsignal das Interaktionsmodul erreicht. Selbstverständlich können auch weitere optische Hervorhebungen verwendet werden, wie beispielsweise ein gelber oder roter Rahmen, der die auf dem Bildschirm dargestellte Bewegungssequenzaufnahme einrahmt. Blinkeffekte dieses Rahmens sind ebenfalls möglich, um die maximale Aufmerksamkeit des Überwachungspersonals auf die dargestellte Bewegungssequenzaufnahme zu lenken. Des Weiteren kann auch mit dem Auslösen eines Signaltons im Überwachungsraum auf die kritische Situation akustisch aufmerksam gemacht werden.

Das auf dem Bildschirm dargestellte Bestätigungseingabefeld wird vorzugsweise ebenfalls optisch hervorgehoben, so dass das diensthabende Überwachungspersonal diesen sofort auf dem Bildschirm findet. Der Bildschirm kann hierbei ein sogenannter «Touchscreen» sein, dessen drucksensitive Oberfläche Berührungen erfassen und in Eingabesignale umwandeln kann. Anstelle eines berührungssensitiven Bildschirms können auch Sensoren vorhanden sein, welche den Bildschirm rasterförmig abtasten und die Position eines Fingers auf dem Bildschirm erfassen können, wenn dieser die Bildschirmoberfläche berührt. Durch ein manuelles Antippen des auf dem Bildschirm dargestellten Bestätigungseingabefeldes wird das Interaktionsmodul dazu veranlasst, das Warnsignal an das Steuerungsmodul zu senden. Aufgrund des übermittelten Warnsignals beeinflusst das Steuerungsmodul den Fahrbetrieb derjenigen Personenförderanlage, bei der die kritische Situation durch das Gefahrenanalysemodul erkannt wurde.

Wie bereits weiter oben erwähnt, findet im Gefahrenanalysemodul ein automatisierter Erkennungsprozess und Beurteilungsprozess kritischer Situationen statt, wobei die durch bekannte Analyseverfahren erkannten, abweichenden Bewegungsabläufe aus den Bewegungssequenzaufnahmen extrahiert und anschliessend beurteilt werden. Um den Beurteilungsprozess durchzuführen, kann im Gefahrenanalysemodul ein Set möglicher kritischer Situationen gespeichert sein. Hierbei umfasst dieses Set verschiedene atypische Bewegungsszenarien, die mit den aus den Bewegungssequenzaufnahmen extrahierten Bewegungsabläufen verglichen werden können. Dieses Set atypischer Bewegungsszenarien kann beispielsweise durch einen Maschinenlernprozess erzeugt werden, indem mittels eines Dummys oder Stuntmans typische kritische Situationen wie Stürze oder leichtsinnige Handlungen auf der Personenförderanlage nachgestellt, erfasst und die dabei extrahierten Bewegungsabläufe als atypische Bewegungsszenarien in das Set aufgenommen werden. Selbstverständlich kann das Set auch mit weiteren atypischen Bewegungsszenarien ergänzt werden, die während des Betriebes der Personenförderanlage zu einem Unfall führten und die vom Gefahrenanalysemodul nicht erkannt wurden. Bei einer ausreichenden Übereinstimmung eines extrahierten Bewegungsablaufes mit einem atypischen Bewegungsszenario kann das Gefahrenanalysemodul das Vorliegen einer kritischen Situation annehmen beziehungsweise feststellen und ein Warnsignal an das Interaktionsmodul senden.

Vorzugsweise weisen die verschiedenen atypischen Bewegungsszenarien des Sets unterschiedliche Gewichtungen im Sinne einer Rangordnung auf. Diesen Gewichtungen entsprechend können unterschiedliche Aktionen zur Beeinflussung des Fahrbetriebes definiert sein. So kann beispielsweise ein erkannter Sturz eines Benutzers eine sehr hohe Gewichtung aufweisen und für diese hohe Gewichtung als Aktion ein Notstopp definiert sein, der sofort eingeleitet wird, wenn das Überwachungspersonal das Bestätigungseingabefeld antippt. Wenn beispielsweise ein Benutzer die Personenförderanlage entgegen ihrer Förderrichtung betritt, kann diese kritische Situation eine mittlere Gewichtung aufweisen und für diese mittlere Gewichtung als Aktion eine sehr sanfte Reduzierung der Fördergeschwindigkeit definiert sein, die nach einer gewissen Verzögerungszeit eingeleitet wird, wenn das Überwachungspersonal das Bestätigungseingabefeld antippt. Eine Verzögerungszeit ist hier angebracht, da der in falscher Richtung laufende Benutzer dies gegebenenfalls unabsichtlich tut und umkehrt, sobald er die falsche Förderrichtung erkennt. Weitere Möglichkeiten zur Beeinflussung des Fahrbetriebes wie akustische und/oder optische Warnhinweise an die Benutzer der Personenförderanlage werden weiter unten beschrieben.

Mit anderen Worten ausgedrückt, kann die Beeinflussung des Fahrbetriebs anhand der Gewichtung erfolgen, so dass gemäss der Gewichtung das Steuerungsmodul sofort einen Sicherheitsschalter der betroffenen Personenförderanlage ansteuert und einen Notstopp einleitet. Das Steuerungsmodul kann auch mit einer der Gewichtung entsprechenden, vordefinierten Verzögerungszeit einen Sicherheitsschalter der betroffenen Personenförderanlage ansteuern und einen Notstopp einleiten. Ferner kann bei einer entsprechenden Gewichtung auch eine Instruktion an eine Steuerung der betroffenen Personenförderanlage gesendet werden. Diese Instruktion veranlasst dann die Steuerung, die Fahrgeschwindigkeit eines Transportbandes der betroffenen Personenförderanlage nach einem vorgegebenen Verzögerungsprofil zu vermindern.

In einer Ausgestaltung der Erfindung kann das Überwachungssystem mehrere Bewegungserfassungsmodule aufweisen, welche die Bewegungssequenzaufnahmen von zumindest zwei verschiedenen Personenförderanlagen aufnehmen. Jedes der Bewegungserfassungsmodule kann eine Codierung aufweisen und versieht seine Bewegungssequenzaufnahmen mit dieser Codierung, beziehungsweise codiert seine Bewegungssequenzaufnahmen entsprechend. Sobald das Gefahrenanalysemodul in einer Bewegungssequenzaufnahme eine kritische Situation erkannt hat, kann es das ausgegebene Warnsignal mit derselben Codierung versehen, welche die Bewegungssequenzaufnahme mit der kritischen Situation aufweist. Im Interaktionsmodul und/oder Steuerungsmodul sind die Bewegungserfassungsmodule über ihre Codierungen der durch sie überwachten Personenförderanlage eindeutig zugeordnet. Das Interaktionsmodul hebt aufgrund eines empfangenen Warnsignals nur die diesem Warnsignal zugehörende Bewegungssequenzaufnahme optisch und/oder akustisch hervor. Bei einem Antippen des Bestätigungseingabefeldes wird das mit der Codierung versehene Warnsignal an das Steuerungsmodul übermittelt und dort die für das Warnsignal und gegebenenfalls anhand seiner Gewichtung vorgesehene Beeinflussung des Fahrbetriebes eingeleitet.

In einer weiteren Ausgestaltung der Erfindung und bei einer implementierten Gewichtung, kann das Gefahrenanalysemodul bei mehreren gleichzeitig erkannten kritischen Situationen unmittelbar einander folgend Warnsignale mit zugehörender Gewichtung an das Interaktionsmodul senden, wobei die Bewegungssequenzaufnahmen anhand ihrer Gewichtung nacheinander optisch und/oder akustisch hervorgehoben werden. Mit anderen Worten wird zuerst die Bewegungssequenzaufnahme mit der kritischsten Situation hervorgehoben. Sobald das Überwachungspersonal das Bestätigungseingabefeld angetippt hat, wird die Bewegungssequenzaufnahme mit der zweitkritischsten Situation hervorgehoben, usw.

Oftmals können sich Benutzer selbst aus kritischen Situationen retten, indem sie sich beispielsweise beim Stürzen gerade noch am Handlauf festhalten können und dadurch die kritische Situation selber auflösen. Das Gefahrenanalysemodul kann in solchen Fällen die Bewegungsabläufe des Benutzers bereits als kritische Situation erkannt haben, bevor der Benutzer sich selbst gerettet hat. Um diesen Umständen Rechnung zu tragen, kann in einer weiteren Ausgestaltung der Erfindung das Interaktionsmodul aufgrund des Warnsignals auf dem Bildschirm nebst dem Bestätigungseingabefeld auch ein Löschungseingabefeld generieren. Das Löschungseingabefeld kann sich optisch vom Bestätigungseingabefeld unterscheiden, so dass das Überwachungspersonal die beiden Felder nicht verwechselt. Durch ein manuelles Antippen des Löschungseingabefeldes kann das Interaktionsmodul dazu veranlasst werden, das Warnsignal zu löschen und die damit verbundene, optisch und/oder akustische Hervorhebung der entsprechenden Bewegungssequenzaufnahme zurückzunehmen. Durch das Betätigen des Löschungseingabefeldes erfolgt keine Weiterleitung an das Steuerungsmodul und damit wird auch der Fahrbetrieb der betroffenen Personenförderanlage nicht beeinflusst.

In einer Weiterbildung kann nach einem Antippen des Bestätigungseingabefeldes oder des Löschungseingabefeldes die Darstellung des Bestätigungseingabefeldes und/oder des Löschungseingabefeldes auf dem Bildschirm gelöscht werden. Dadurch kann die Situation auf der Bewegungssequenzaufnahme ohne Teilabdeckung durch diese Felder weiter beobachtet werden. Auch wird hierdurch der Überwachungsperson angezeigt, dass die von ihm gewählte Reaktion durch das Überwachungssystem umgesetzt wird.

Falls Zweifel bestehen, dass die Überwachungsperson trotz optischer Unterscheidung in der Eile das Löschungseingabefeld statt das Bestätigungseingabefeld drücken könnte, kann diesen Zweifeln mit einer Weiterbildung abgeholfen werden. Diese Weiterbildung sieht vor, dass unmittelbar nach einem Antippen des Löschungseingabefeldes die zugeordnete Bewegungssequenzaufnahme für eine vorbestimmte Zeit bevorzugt im Gefahrenanalysemodul analysiert wird. Mit anderen Worten wird diese Bewegungssequenzaufnahme für eine vorbestimmte Zeit weiter auf kritische Situationen untersucht. Wenn die Überwachungsperson irrtümlich das Löschungseingabefeld anstatt das Bestätigungseingabefeld angetippt hat, «poppt» dieselbe Bewegungssequenzaufnahme zusammen mit dem Löschungseingabefeld und dem Bestätigungseingabefeld sofort wieder auf und die Überwachungsperson kann ihre Auswahl, wie das Überwachungssystem reagieren soll, erneut treffen.

In einer Ausgestaltung des Überwachungssystems kann der Bildschirm des Interaktionsmoduls in mehrere kleine Bildschirmbereiche und einen grossen Bildschirmbereich unterteilt sein, wobei für jedes Bewegungserfassungsmodul ein zugeordneter Bildschirmbereich vorhanden ist und bei einem empfangenen Warnsignal das Interaktionsmodul die dem Warnsignal zugeordnete Bewegungssequenzaufnahme optisch auf dem grossen Bildschirmbereich anzeigt.

In einer weiteren Ausgestaltung kann das Interaktionsmodul einen zentralen Bildschirm und in dessen unmittelbarer Nähe angeordnet, weitere Bildschirme aufweisen, wobei für jedes Bewegungserfassungsmodul ein zugeordneter Bildschirm vorhanden ist und bei einem empfangenen Warnsignal das Interaktionsmodul die dem Warnsignal zugeordnete Bewegungssequenzaufnahme optisch auf dem zentralen Bildschirm anzeigt. Vorzugsweise weist der zentrale Bildschirm eine grössere Bildschirmfläche auf als die weiteren Bildschirme.

In einer weiteren Ausgestaltung kann das Interaktionsmodul bei Vorhandensein eines Warnsignals eine akustische und/oder optische Warnung über ein Ausgabemodul an die Benutzer der Personenförderanlage ausgeben. Das Ausgabemodul ist im Bereich derjenigen Personenförderanlage angeordnet, welcher das Warnsignal zugeordnet ist. Mit anderen Worten gesagt, ist jeder Personenförderanlage mindestens ein Ausgabemodul zugeordnet, das abhängig von der Codierung des Warnsignals bedient wird. Vorzugsweise ist dieses derart auf die Personenförderanlage ausgerichtet, dass die akustische Warnung nur die Benutzer dieser Personenförderanlage oder einzelne dieser Benutzer anspricht, und nicht die ganze Umgebung. Das Ausgabemodul kann hierbei ein Lautsprecher, eine Lautsprecheranlage eine Bildschirmanzeige ein Projektor für zweidimensionale Darstellungen oder Hologramme und dergleichen mehr sein. Am effektivsten ist eine Kombination von akustisch und optisch ausgegebenen Warnhinweisen beziehungsweise Warnungen. Die auszugebenden Warnungen können auf die entsprechende kritische Situation und deren Behebung zugeschnitten sein, so dass bei einer Einleitung eines Notstopps die übrigen Benutzer gewarnt werden, bevor dieser eingeleitet wird. Vorzugsweise ist ein Set von verschiedenen Warnungen vorhanden, aus dem eine für die kritische Situation adäquate Warnung beispielsweise anhand der weiter oben beschriebenen Gewichtung automatisch ausgewählt und über das Ausgabemodul ausgegeben wird.

Da durch die Aufteilung des Bildschirms in mehrere Bildschirmbereiche oder durch die Anordnung mehrerer Bildschirme die Voraussetzung geschaffen wird, dass das Überwachungspersonal die Bewegungssequenzaufnahmen aller Bewegungserfassungsmodule in Echtzeit sieht, kann es auch nicht erkannte, kritische Situationen entdecken. In diesem Falle kann die Überwachungsperson den kleinen Bildschirmbereich oder Bildschirm, in dem die kritische Situation erkennbar ist, antippen. Dessen Bewegungssequenzaufnahme wird sofort auf dem grossen Bildschirmbereich oder Bildschirm zusammen mit dem Bestätigungseingabefeld und gegebenenfalls Löschungseingabefeld angezeigt. In dieser Situation wird im Interaktionsmodul ein Warnsignal erzeugt, welches die Codierung des zugeordneten Bewegungserfassungsmoduls sowie eine Instruktion zur Einleitung eines Notstopps enthält. Wenn das Bestätigungseingabefeld angetippt wird, wird das Warnsignal an das Steuerungsmodul weitergeleitet, welches den Notstopp bei der betroffenen Personenförderanlage sofort einleitet.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind. Gleiche oder gleichwirkende Merkmale weisen hierbei das gleiche Bezugszeichen auf. Es zeigen:
- Figur 1:: eine Personenförderanlage in dreidimensionaler Ansicht, deren Fahrbetrieb überwacht werden soll und ein Überwachungssystem zur Überwachung dieser Personenförderanlage;
- Figur 2:: mehrere Personenförderanlagen in dreidimensionaler Ansicht, deren Fahrbetrieb überwacht werden soll und das zur Überwachung mehrerer Personenförderanlagen adaptierte Überwachungssystem der Figur 1.

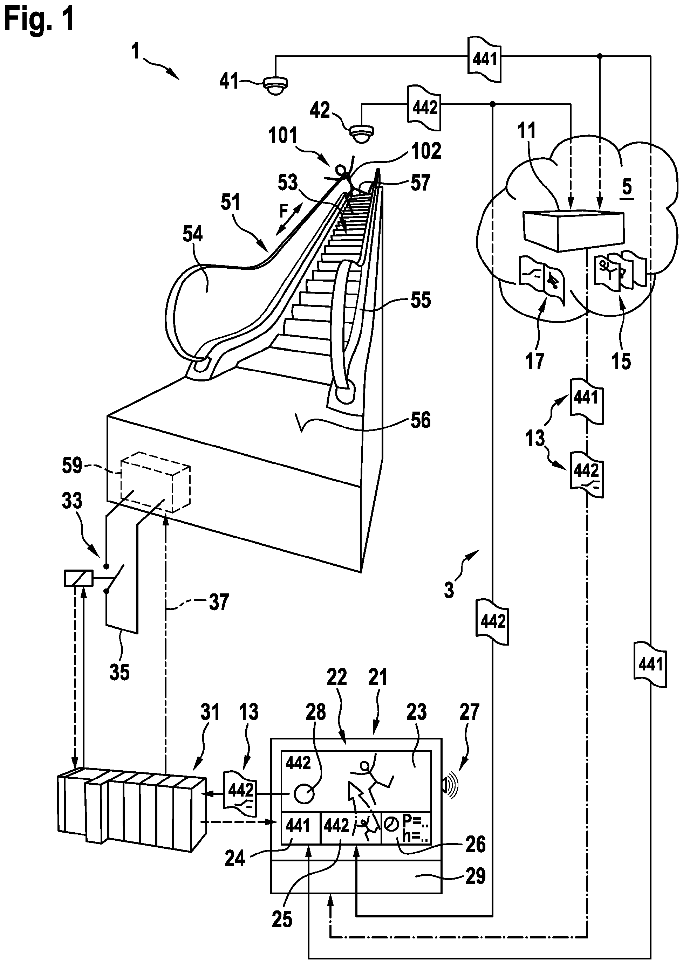

Die Figur 1 zeigt ein Überwachungssystem 1 für eine Personenförderanlage 51. Das Überwachungssystem 1 weist ein Gefahrenanalysemodul 11, ein Interaktionsmodul 21, ein Steuerungsmodul 31 und zwei Bewegungserfassungsmodule 41, 42 auf. Die vorgenannten Module 11, 21, 31, 41, 42 stehen über ein Datennetzwerk 3 miteinander in Verbindung. Die Ausgestaltung des Datennetzwerkes 3 ist nicht detailliert wiedergegeben, da dies auf unterschiedlichste Art und Weise errichtet sein kann, wie beispielsweise über ein lokales kabelgebundenes und/oder kabelloses Datennetzwerk 3, über Internetverbindungen in eine Datenwolke (Cloud) 5, über CAN-Busssysteme, Buetooth-Verbindungen und dergleichen mehr. Erfindungsrelevant ist nur, dass die einzelnen Module 11, 21, 31, 41, 42 Daten untereinander austauschen können, wobei dieser Datenaustausch zwischen den einzelnen Modulen 11, 21, 31, 41, 42 je nach Bedarf unidirektional oder bidirektional erfolgen kann. Die wichtigsten Verbindungen des Datennetzwerks 3 sind mittels Pfeile symbolisch dargestellt. Zudem ist zu erwähnen, dass zumindest das Gefahrenanalysemodul 11, gegebenenfalls auch eine Recheneinheit 29 des Interaktionsmoduls 21 und/oder das Steuerungsmodul 31 und deren Datenspeicher in der Datenwolke 5 implementiert sein können.

Die beiden Bewegungserfassungsmodule 41, 42 sind auf die zugeordnete Personenförderanlage 51 gerichtet. Selbstverständlich kann auch nur ein Bewegungserfassungsmodul vorhanden sein, wenn der Förderbereich 53 der Personenförderanlage 51 nicht allzu lang ist und ein einziges Bewegungserfassungsmodul 41, 42 ausreicht, um den gesamten Förderbereich 53 der Personenförderanlage 51, deren Balustraden 54, 55 sowie deren beide Zutrittsbereiche 56, 57 zu überblicken beziehungsweise zu erfassen.

Das Bewegungserfassungsmodul 41, 42 kann elektronisch verarbeitbare Bewegungssequenzaufnahmen 441, 442 von Situationen erfassen, die sich auf der zugeordneten Personenförderanlage 51 ereignen. Hierbei eingeschlossen kann auch das nahe Umfeld der Personenförderanlage 51 sein. Zu diesem nahen Umfeld gehören beispielsweise die den Zutrittsbereichen 56, 57 vorgelagerten Bereiche des Bauwerkes (nicht dargestellt), in dem die Personenförderanlage 51 eingebaut ist. Die vorgelagerten Bereiche des Bauwerkes werden auch als Vorräume bezeichnet und gegebenenfalls durch Näherungssensoren der Personenförderanlage 51 überwacht, welche Näherungssensoren ihre Erfassungsdaten an eine «Start/Stopp-Automatik» der Personenförderanlage 51 übermitteln.

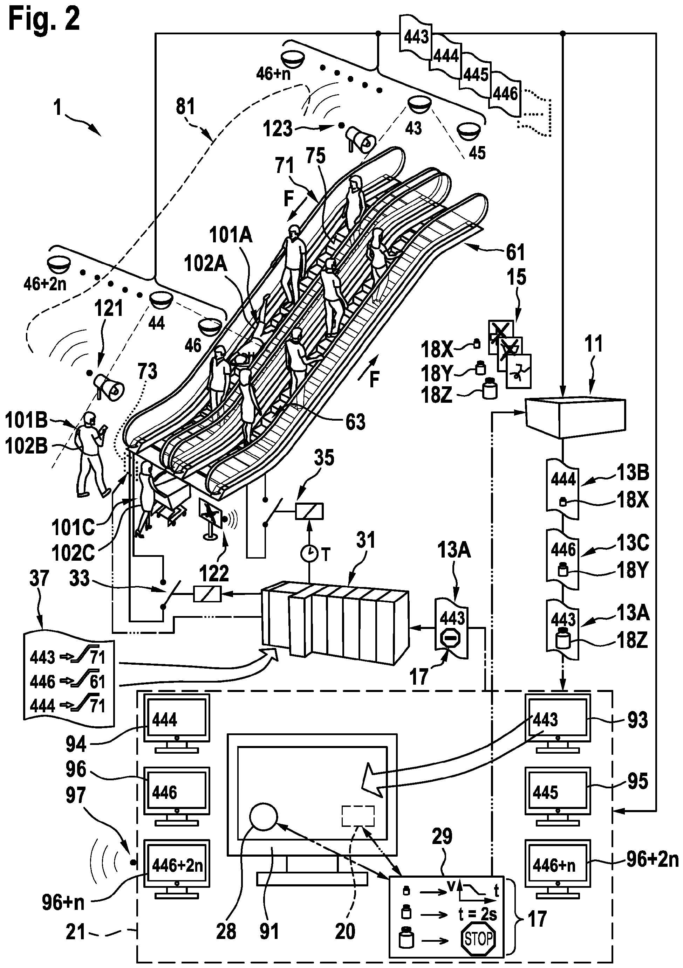

Als Bewegungserfassungsmodule 41, 42 können Videokameras, Wärmebildkameras, Laserscanner, TOF-Kameras, eine Kombination aus mehreren Sensoren und dergleichen mehr verwendet werden, wobei deren Bewegungssequenzaufnahmen 441, 442 dementsprechend als Videofilmsequenz, Bildsequenz, Wärmebildsequenz, etc. in elektronisch verarbeitbarer Form erfasst werden. Bei der Verwendung von mehreren Bewegungserfassungsmodulen 41, 42 pro Personenförderanlage 51 ist jedem Bewegungserfassungsmodul 41, 42 ein bestimmter Abschnitt beziehungsweise Bereich (siehe Figur 2) zugeordnet. Diese Bereiche überlappen sich vorzugsweise, so dass keine Überwachungslücken vorhanden sind, in denen sich unbeobachtet kritische Situationen 101 von Benutzern 102 ereignen können.

Um den Fahrbetrieb der Personenförderanlage 51 effizient und sicher zu überwachen, übermitteln die Bewegungserfassungsmodule 41, 42 ihre Bewegungssequenzaufnahmen 441, 442 in Echtzeit parallel an das Interaktionsmodul 21 und an das Gefahrenanalysemodul 11.

Die Bewegungssequenzaufnahmen 441, 442 der beiden Bewegungserfassungsmodule 41, 42 werden auch nebeneinander auf einem Bildschirm 22 des Interaktionsmoduls 21 angezeigt, so dass eine Überwachungsperson (nicht dargestellt) des Überwachungspersonals den gesamten Fahrbetrieb F der Personenförderanlage 51 in Echtzeit einsehen kann. Im vorliegenden Ausführungsbeispiel ist der Bildschirm 22 in mehrere kleine Bildschirmbereiche 24, 25, 26 und einen grossen Bildschirmbereich 23 unterteilt. Für die Bewegungssequenzaufnahmen 441, 442 jedes Bewegungserfassungsmoduls, 41, 42 ist ein zugeordneter, kleiner Bildschirmbereich 24, 25 vorhanden. Wie in der Figur 1 dargestellt, ist ein weiterer kleiner Bildschirmbereich 26 definiert, in welchem beispielsweise Betriebsdaten der überwachten Personenförderanlage, der Lüftung, der Feuerüberwachung und dergleichen mehr, angezeigt werden können.

Parallel zur Darstellung auf dem Bildschirm 22 des Interaktionsmoduls 21, werden im Gefahrenanalysemodul 11 die Bewegungssequenzaufnahmen 441, 442 mittels Analysealgorithmen auf kritische Situationen für Benutzer 101 der Personenförderanlage 51 untersucht. Diese Analysealgorithmen basieren beispielsweise auf bekannten Bildverarbeitungstechniken, die in Selbstlernprozessen unter Verwendung von künstlicher Intelligenz in neuronalen Netzwerken optimiert und angewendet werden. Eine verbreitete Bildverarbeitungstechnik, um aus einem Bild eine Information zu erzeugen, ist beispielsweise die Berechnung des Histogramms, welches Aufschluss über die statistische Helligkeitsverteilung im Bild gibt. Solch ein Histogramm kann zum Beispiel als Konfiguration für weitere Bildverarbeitungsschritte oder als Information für einen menschlichen Benutzer einer Software dienen. Weitere berechenbare Informationen eines Bildes sind zum Beispiel seine Entropie oder mittlere Helligkeit. Basierend auf diesen Informationen können Vektoranalysen folgen, wie sich einzelne markante Stellen zueinander verschieben und hieraus Rückschlüsse auf Bewegungsszenarien von Benutzern 102 gezogen werden. Sobald ein Bewegungsablauf eines Benutzers 101 beispielsweise als Skelett-Bewegungsablauf extrahiert und dessen Bewegungen erkannt worden sind, kann er mit einem gespeicherten Set möglicher kritischer Situationen, die als atypische Bewegungsszenarien 15 mögliche kritische Situationen 101 wiedergeben, verglichen werden. Selbstverständlich können an Stelle des vorangehend beschriebenen Verfahrens auch weitere aus dem technischen Gebiet der Videoüberwachung bekannte Analysetechniken und Analyseerfahren eingesetzt werden, um Bewegungsabläufe der Benutzer 101 aus den Bewegungssequenzaufnahmen 441, 442 zu extrahieren.

Wie das Beispiel zeigt, hat das bezüglich der Betrachtungsebene weiter hinten angeordnete Bewegungserfassungsmodul 42 eine Bewegungssequenzaufnahme 442 mit einer kritischen Situation 101 aufgenommen und an das Gefahrenanalysemodul 11 gesendet. Dort wird durch Extraktion und Vergleich die kritische Situation erkannt und vom Gefahrenanalysemodul 11 ein Warnsignal 13 an das Interaktionsmodul 21 gesendet. Wenn das Interaktionsmodul 21 dieses Warnsignal 13 empfängt, wird die dem Warnsignal 13 zugeordnete Bewegungssequenzaufnahme 442 optisch auf dem grossen Bildschirmbereich 23 anzeigt.

Wie weiter oben erwähnt, sind im dargestellten Ausführungsbeispiel der Figur 1 entsprechend der Anzahl Bewegungserfassungsmodule 41, 42 kleine Bildschirmbereiche 24, 25 definiert, so dass die auf dem grossen Bildschirmbereich 23 angezeigte Bewegungssequenzaufnahme 442 parallel auch auf dem zugeordneten kleinen Bildschirmbereich 25 gezeigt wird. Selbstverständlich kann das Bildschirmlayout des Interaktionsmoduls 21 auch so gewählt werden, dass die Anzahl kleine Bildschirmbereiche 24, 25, 26 um einen Bereich geringer ist als die Anzahl Bewegungserfassungsmodule 41, 42, so dass immer diejenige Bewegungssequenzaufnahme 441, 442 auf dem grossen Bildschirmbereich 23 weiterläuft, bei der zuletzt eine kritische Situation 101 erkannt worden ist. Sobald wieder ein Warnsignal 13 an das Interaktionsmodul 21 gesendet wird, tauscht die entsprechende Bewegungssequenzaufnahme 441, 442 mit der auf dem grossen Bildschirmbereich 23 angezeigten Bewegungssequenzaufnahme 441, 442 «die Plätze» beziehungswese die Bildschirmbereiche.

Da das Interaktionsmodul 21 aufgrund des Warnsignals 13 die auf einem kleinen Bildschirmbereich 24, 25, 26 angezeigte Bewegungssequenzaufnahme 441, 442 auch auf einem grösseren Bildschirmbereich 23 zeigt, wird diese optisch hervorgehoben. Selbstverständlich kann diese beispielsweise zusätzlich durch eine rot oder gelb blinkende Umrahmung hervorgehoben werden. Zudem kann die Aufmerksamkeit des Überwachungspersonals auch akustisch erhöht werden, beispielsweise durch definierte Signaltöne 27. Es sind auch andere Darstellungslayouts möglich, beispielsweise indem statt eines dauernd vorhandenen grossen Bildschirmbereichs 23 der entsprechende kleine Bildschirmbereich 24, 25, 26 bei einem Warnsignal 13 gezoomt wird.

Da eine kritische Situation 101 meistens ein dynamischer Vorgang ist, ist es durchaus möglich, dass diese zuerst in der Bewegungssequenzaufnahme 442 des bezüglich der Betrachtungsebene weiter hinten angeordneten Bewegungserfassungsmoduls 42 und dann in der Bewegungssequenzaufnahme 441 des weiter vorne angeordneten Bewegungserfassungsmoduls 41 aufgezeichnet wird. Da beide Bewegungssequenzaufnahmen 441, 442 simultan vom Gefahrenanalysemodul 11 analysiert werden, werden nacheinander entsprechende Warnsignale 13 an das Interaktionsmodul übermittelt, welche unterschiedliche Codierungen aufweisen. In einer Recheneinheit 29 des Interaktionsmoduls 21 ist eine Logik implementiert, welche einen automatischen Wechsel der im grossen Bildschirmbereich 23 dargestellten Bewegungssequenzaufnahme 441, 442 gemäss der Reihenfolge der Warnsignale 13 vornimmt.

Das Interaktionsmodul 21 hebt nicht nur die entsprechende Bewegungssequenzaufnahme 441, 442 hervor, sondern generiert auf dem Bildschirm 22 zusätzlich ein Bestätigungseingabefeld 28. Durch ein manuelles Antippen des Bestätigungseingabefeldes 28 wird das Interaktionsmodul 21 dazu veranlasst, das Warnsignal 13 an das Steuerungsmodul 31 zu senden. Das Steuerungsmodul 31 beeinflusst aufgrund des übermittelten Warnsignals 13 den Fahrbetrieb F der Personenförderanlage 51. Falls das Überwachungspersonal auf der hervorgehobenen Bewegungssequenzaufnahme 441, 442 erkennt, dass der von der kritischen Situation 101 betroffene Benutzer 102 diese selbst entschärfen kann oder entschärft hat, braucht es das Bestätigungseingabefeld 28 nicht anzutippen und es findet keine Beeinflussung des Fahrbetriebes F statt.

Mit anderen Worten ausgedrückt, kann im Gefahrenanalysemodul 11 ein Set möglicher kritischer Situationen 101 gespeichert sein. Das Set kann verschiedene atypische Bewegungsszenarien 15 umfassen, mit denen aus den Bewegungssequenzaufnahmen 441, 442 extrahierte Bewegungsabläufe verglichen werden. Bei einer ausreichenden Übereinstimmung eines extrahierten Bewegungsablaufes mit einem atypischen Bewegungsszenario 15 wird das Vorliegen einer kritischen Situation 101 angenommen und das Warnsignal 13 an das Interaktionsmodul 21 gesendet. Je nach erkanntem Bewegungsszenario 15 können unterschiedliche Aktionen vorgesehen sein, wie der Fahrbetrieb F der Personenförderanlage 51 beeinflusst werden soll. Hierzu ist ein Set von Instruktionen 17 im Gefahrenanalysemodul 11 gespeichert. Die Instruktionen 17 der auszuführenden Aktion können vom Gefahrenanalysemodul 11 abhängig von der erkannten kritischen Situation 101, zusammen mit dem Warnsignal 13 an das Interaktionsmodul 21 gesendet werden. Beim Antippen des Bestätigungseingabefeldes 28 werden die auszuführenden Instruktionen 17 zusammen mit dem Warnsignal 13 an das Steuerungsmodul 31 gesendet.

Selbstverständlich ist es auch möglich, dass das Warnsignal 13 eine Gewichtung enthalten kann, welche im Interaktionsmodul 21 gespeicherte, der Gewichtung entsprechende Instruktionen 17 aufruft und beim Antippen des Bestätigungseingabefeldes 28 zusammen mit dem Warnsignal 13 an das Steuerungsmodul 31 sendet. Die atypischen Bewegungsszenarien 15, deren Gewichtung und die zugeordneten Instruktionen 17 zur Beeinflussung des Fahrbetriebes F der Personenförderanlage 51 werden weiter unten in Zusammenhang mit der Figur 2 ausführlicher beschrieben.

In Figur 1 ist beispielhaft dargestellt, wie ein Benutzer 102 der Personenförderanlage 51 in deren Förderbereich 53 strauchelt und fällt. Das Bewegungserfassungsmodul 42 nimmt diese kritische Situation 101 in seiner Bewegungssequenzaufnahme 442 auf und sendet diese, durch die Pfeile symbolisch dargestellt, an das Interaktionsmodul 21, wo es im dafür vorgesehenen kleinen Bildschirmbereich 25 angezeigt wird. Parallel dazu wird dieselbe Bewegungssequenzaufnahme 442 auch an das Gefahrenanalysemodul 11 gesendet. Aus der Bewegungssequenzaufnahme 442 wird mittels Bildverarbeitungsverfahren der Bewegungsablauf des Benutzers 102 extrahiert und mit dem im Gefahrenanalysemodul 11 gespeicherten Set atypischer Bewegungsszenarien 15 verglichen. Da der extrahierte Bewegungsablauf ausreichend mit einem der atypischen Bewegungsszenarien 15 übereinstimmt, welches ein Straucheln definiert, sendet das Gefahrenanalysemodul 11 ein Warnsignal 13 zusammen mit der zugeordneten Instruktion 17 «Notstopp» an das Interaktionsmodul 21. Die Übermittlung des Warnsignals 13 ist mittels eines strichpunktierten Pfeils dargestellt.

Mit der Übersendung des Warnsignals 13 wird die Bewegungssequenzaufnahme 442 des Bewegungserfassungsmoduls 42 auch auf dem grossen Bildschirmbereich 23 und zusammen mit dem Bestätigungseingabefeld 28 angezeigt. Sobald das Überwachungspersonal das Bestätigungseingabefeld 28 antippt, werden das Warnsignal 13 und die vom Gefahrenanalysemodul 11 mitgesendeten Instruktionen 17 an das Steuerungsmodul 31 übermittelt. Das Steuerungsmodul 31 öffnet einen Schalter 33 eines Sicherheitskreises 35 der Personenförderanlage 51, worauf sofort ein Notstopp durch die Steuerung 59 der Personenförderanlage 51 eingeleitet wird. Wie der mit unterbrochener Linie dargestellte Pfeil zeigt, wird vom Sicherheitskreis 35 die erfolgte Öffnung des Schalters 33 an das Steuerungsmodul 31 und von dort an das Interaktionsmodul 21 zurückgemeldet und im kleinen Bildschirmbereich 26 angezeigt.

Der strichdoppelpunktierte Pfeil 37 zeigt, dass das Steuerungsmodul 31 auch direkt auf die Steuerung 59 der Personenförderanlage 51 zugreifen und an diese Instruktionen 17 zur Beeinflussung des Fahrbetriebes F übermitteln kann. Dies ist beispielsweise dann der Fall, wenn ein Benutzer 102 entgegen der aktuellen Förderrichtung die Personenförderanlage 51 betritt und für dieses atypische Bewegungsszenario 15 als Instruktion 17 eine Reduktion der Fördergeschwindigkeit vorgesehen ist.

In der Figur 2 sind mehrere Personenförderanlagen 61, 71, 81 in dreidimensionaler Ansicht dargestellt, deren Fahrbetrieb F überwacht werden soll. Hierzu wurde das Überwachungssystem 1 der Figur 1 entsprechend adaptiert. Auch dieses Überwachungssystem 1 weist ein Gefahrenanalysemodul 11, ein Interaktionsmodul 21 und ein Steuerungsmodul 31 auf.

Um mehrere Personenförderanlagen 61, 71, 81 überwachen zu können, weist das hierzu adaptierte Überwachungssystem 1 mehrere Bewegungserfassungsmodule 43, 44, 45, 46, 46+n, 46+2n auf. Im vorliegenden Ausführungsbeispiel sind zwei als Fahrtreppen ausgestaltete Personenförderanlagen 61, 71 detailliert dargestellt. Die mit unterbrochener Linie skizzierte Balustrade symbolisiert eine Vielzahl weiterer Personenförderanlagen 81. Jeder dieser Personenförderanlagen 61, 71, 81 sind jeweils zwei Bewegungserfassungsmodule 43, 44, 45, 46, 46+n, 46+2n zugeordnet, die vom Fahrbetrieb F «ihrer» Personenförderanlagen 61, 71, 81 Bewegungssequenzaufnahmen 443, 444, 445, 446, ... aufnehmen. Jedes der Bewegungserfassungsmodule 43, 44, 45, 46, 46+n, 46+2n weist eine Codierung 443, 444, 445, 446, ... auf und codiert seine Bewegungssequenzaufnahmen 443, 444, 445, 446, ...dementsprechend. Aus Übersichtsgründen wird dasselbe Bezugszeichen einer Bewegungssequenzaufnahme 443, 444, 445, 446, ... auch für dessen Codierung 443, 444, 445, 446, ... verwendet.

Wie beim Ausführungsbeispiel der Figur 1 werden auch beim Ausführungsbeispiel der Figur 2 die Bewegungssequenzaufnahmen 443, 444, 445, 446, ... parallel an das Gefahrenanalysemodul 11 und an das Interaktionsmodul 21 gesendet. Im Falle einer erkannten kritischen Situation 101A, 101B, 101C, versieht das Gefahrenanalysemodul 11 ein ausgegebenes Warnsignal 13A, 13B, 13C mit der entsprechenden Codierung 443, 444, 445, 446, ... und sendet dieses wie durch den strichpunktierten Pfeil symbolisch angegeben, an das Interaktionsmodul 21.

Anders als in der Figur 1, weist das Überwachungsmodul 21 der Figur 2 einen zentralen Bildschirm 91 und in dessen unmittelbarer Nähe angeordnet, weitere Bildschirme 93 bis 96+2n auf, wobei für jedes Bewegungserfassungsmodul 43, 44, 45, 46, 46+n, 46+2n ein zugeordneter Bildschirm 93 bis 996+2n vorhanden ist, der jeweils deren Bewegungssequenzaufnahmen 443, 444, 445, 446, ... zeigt. Bei einem empfangenen Warnsignal 13A, 13B, 13C zeigt das Interaktionsmodul 21 die dem Warnsignal 13A, 13B, 13C zugeordnete Bewegungssequenzaufnahme 443, 444, 445, 446, ... optisch auf dem zentralen Bildschirm 91 an. Um die zugeordnete Bewegungssequenzaufnahme 443, 444, 445, 446, ... optisch hervorzuheben, weist der zentrale Bildschirm 91 eine grössere Bildschirmfläche auf als die weiteren Bildschirme 93 bis 96+2n.

Aufgrund der übermittelten Codierung 443, 444, 445, 446, ... hebt das Interaktionsmodul 21 beim Empfang eines Warnsignals 13A, 13B, 13C nur die diesem Warnsignal 13A, 13B, 13C zugehörende Bewegungssequenzaufnahme 443, 444, 445, 446, ... optisch und/oder akustisch hervor.

Auf den in Figur 2 dargestellten Personenförderanlagen 61, 71 und in deren nahem Umfeld sind auch verschiedene kritische Situationen 101A bis 101C beispielhaft dargestellt. Zu diesen kritischen Situationen 101A, 101B, 101C passend sind im Gefahrenanalysemodul 11 ein Set möglicher kritischer Situationen gespeichert. Konkret umfasst das Set verschiedene atypische Bewegungsszenarien 15, mit denen aus den Bewegungssequenzaufnahmen 443, 444, 445, 446, ... extrahierte Bewegungsabläufe verglichen werden. Dabei kann auch der mögliche Ort eine Rolle spielen an denen eine solche kritische Situation 101A, 101B, 101C überhaupt stattfinden kann. Ein atypisches Bewegungsszenario 15, welches ein Herunterfallen im schrägen Mittelteil einer Fahrtreppe wiedergibt, kann sich nicht in gleicher Weise im Vorraum der Personenförderanlage 61, 71, 81 oder in einem der Zutrittsbereiche 56, 57 (siehe Figur 1) ereignen. Das Set atypischer Bewegungsszenarien 15 kann beispielsweise durch einen Maschinenlernprozess erzeugt werden, indem mittels eines Dummys oder Stuntmans typische kritische Situationen 101A, 101B, 101C wie beispielsweise Stürze oder leichtsinnige Handlungen auf der Personenförderanlage 61, 71, 81 nachgestellt werden. Die dabei erfassten und extrahierten Bewegungsabläufe können als atypische Bewegungsszenarien 15 in das Set aufgenommen werden. Selbstverständlich kann das Set auch mit weiteren atypischen Bewegungsszenarien 15 ergänzt werden, die während des Betriebes der Personenförderanlage 61, 71, 81 zu einem Unfall führten und die vom Gefahrenanalysemodul 11 nicht erkannt wurden. Bei einer ausreichenden Übereinstimmung eines extrahierten Bewegungsablaufes mit einem atypischen Bewegungsszenario 15 kann das Gefahrenanalysemodul 11 das Vorliegen einer kritischen Situation annehmen beziehungsweise feststellen und ein Warnsignal 13A, 13B, 13C an das Interaktionsmodul 21 senden.

Wie symbolisch mit verschieden grossen Gewichtssteinen 18X, 18Y, 18Z dargestellt, weisen die verschiedenen atypischen Bewegungsszenarien 15 des Sets unterschiedliche Gewichtungen 18X, 18Y, 18Z im Sinne einer Rangordnung auf. Die vom Bewegungserfassungsmodul 43 aufgenommene kritische Situation 101A wird im Gefahrenanalysemodul 11 als ein «Herunterfallen» erkannt und das zugehörende Warnsignal 13A mit der höchsten Gewichtung 18Z versehen, da ein Weiterführen des Fahrbetriebes F zu starken Verletzungen des heruntergefallenen Benutzers 102A führen könnte.

Die vom Bewegungserfassungsmodul 44 aufgenommene kritische Situation 101B wird im Gefahrenanalysemodul 11 als ein «in falscher Richtung betreten» erkannt und das zugehörende Warnsignal 13B mit der geringsten Gewichtung 18X versehen. Durch falsches Betreten bringt sich der Benutzer 102B nicht unmittelbar in Gefahr, sondern stört eher die entgegenkommenden Benutzer beim Verlassen der Personenförderanlage 71.

Die vom Bewegungserfassungsmodul 46 aufgenommene kritische Situation 101C wird im Gefahrenanalysemodul 11 als ein «Betreten mit Einkaufswagen» erkannt und das zugehörende Warnsignal 13C mit einer mittleren Gewichtung 18Y versehen. Hierbei ist die Benutzerin 102C erst in Gefahr, wenn sie mit ihrem Einkaufswagen den ansteigenden Mittelteil der Personenförderanlage 61 erreicht.

Anders als in der Figur 1, ist in der Figur 2 ein Set an Instruktionen 17 nicht im Gefahrenanalysemodul 11, sondern in einer Rechnereinheit mit Speichermedium 29 des Interaktionsmoduls 21 hinterlegt. Die Instruktionen 17 können der Gewichtung 18X, 18Y, 18Z des Warnsignals 13A, 13B, 13C entsprechend abgerufen und mit diesem verknüpft werden. Bei einem Antippen des Bestätigungseingabefeldes 28, wird das mit der Codierung 443, 444, 445, 446, ... und den umzusetzenden Instruktionen 17 versehene Warnsignal 13A, 13B, 13C an das Steuerungsmodul 31 übermittelt. Die Beeinflussung des Fahrbetriebs F der Personenförderanlagen 61, 71, 81 erfolgt anhand der Gewichtung beziehungsweise der dieser Gewichtung 18X, 18Y, 18Z zugeordneten Instruktionen 17. So werden beispielsweise bei der vom Bewegungserfassungsmodul 43 erfassten kritischen Situation 101A Instruktionen 17 mit dem Warnsignal 13A verknüpft, bei denen das Steuerungsmodul 31 sofort einen Sicherheitsschalter 33 der betroffenen Personenförderanlage 71 ansteuert und einen Notstopp einleitet.

Bei der vom Bewegungserfassungsmodul 46 erfassten kritischen Situation 101C werden Instruktionen 17 mit dem Warnsignal 13C verknüpft, bei denen das Steuerungsmodul 31 mit einer der Gewichtung 18Y entsprechenden, vordefinierten Verzögerungszeit T einen Sicherheitsschalter 35 der betroffenen Personenförderanlage 61 ansteuert. Hierdurch ist ausreichend Zeit vorhanden, die Benutzerin 102C zu warnen (siehe weiter unten), so dass sie den Vorraum der Personenförderanlage 61 verlässt, bevor sie deren Förderbereich 63 erreicht und ein Stopp eingeleitet wird.

Bei der vom Bewegungserfassungsmodul 44 erfassten kritischen Situation 101B werden Instruktionen 17 mit dem Warnsignal 13B verknüpft, die, mit einem strichvierpunktierten Pfeil symbolisch dargestellt, über das Steuerungsmodul 31 an eine Steuerung 73 der betroffenen Personenförderanlage 71 gesendet werden. Diese Instruktionen 17 veranlassen die Steuerung 73, die Fahrgeschwindigkeit eines Transportbandes 75 der betroffenen Personenförderanlage 71 nach einem vorgegebenen Verzögerungsprofil zu vermindern.

Es versteht sich von selbst, dass bei zwei zeitgleich auftretenden kritischen Situationen 101A, 101B an derselben Personentransportanlage 71 und kurz hintereinander an das Steuerungsmodul weitergeleiteten Warnsignalen 13A, 13B die Instruktionen 17 mit der höheren Gewichtung 18Z vom Steuerungsmodul 31 bevorzugt umgesetzt werden.

Damit die Instruktionen 17 bei der richtigen Personenförderanlage 61, 71, 81 umgesetzt werden, sind im Steuerungsmodul 31 die Codierungen der Bewegungssequenzaufnahmen 443, 444, 445, 446, ... in einem Speichermedium 37 hinterlegt und den durch sie überwachten Personenförderanlagen 61, 71, 81 eindeutig zugeordnet. Mit anderen Worten ausgedrückt, kann das Steuerungsmodul 31 bei einem Weiterleiten des Warnsignals 13A, 13B, 13C die zugehörenden Instruktionen 17 bei der richtigen Personenförderanlage 61, 71, 81 umsetzen.

Da mit dem Überwachungssystem 1 der Figur 2 mehrere Personenförderanlagen 61, 71, 81 überwacht werden, ist es durchaus möglich, dass sich wie dargestellt, mehrere kritischen Situationen 101A, 101B, 101C gleichzeitig ereignen. In dieser Situation sendet das Gefahrenanalysemodul 11 unmittelbar einander folgend Warnsignale 13A, 13B, 13C mit zugehörender Gewichtung 18X, 18Y, 18Z an das Interaktionsmodul 21. Die Bewegungssequenzaufnahmen 443, 444, 445, 446, ... werden im Interaktionsmodul 21 nun anhand ihrer Gewichtung 18X, 18Y, 18Z nacheinander optisch und/oder akustisch auf dem zentralen Bildschirm 91 hervorgehoben, so dass das Überwachungspersonal immer die kritischsten Situationen 101A, 101B, 101C zuerst beurteilen kann.

Dieses «Nacheinander» kann unterschiedlich verwirklicht werden. So kann die entsprechende Bewegungssequenzaufnahme 443, 444, 445, 446, ... für eine vorbestimmte Zeitspanne hervorgehoben angezeigt werden, bevor die nächste Bewegungssequenzaufnahme 443, 444, 445, 446, ... angezeigt wird. Der Wechsel zur nächsten Bewegungssequenzaufnahme 443, 444, 445, 446, ... kann auch mit einem Antippen des Bestätigungseingabefeldes 28 oder des nachfolgend beschriebenen Löschungseingabefeldes 20 erfolgen.

Im vorliegenden Ausführungsbeispiel der Figur 2 generiert das Interaktionsmodul 21 aufgrund des Warnsignals 13A, 13B, 13C auf dem Bildschirm nebst dem Bestätigungseingabefeld 28 auch ein Löschungseingabefeld 20. Durch ein manuelles Antippen des Löschungseingabefeldes 20 wird das Interaktionsmodul 21 dazu veranlasst, das Warnsignal 13A, 13B, 13C zu löschen und die damit verbundene, optisch und/oder akustische Hervorhebung der entsprechenden Bewegungssequenzaufnahme 443, 444, 445, 446, ... zurückzunehmen beziehungsweise nicht mehr auf dem zentralen Bildschirm 91 anzuzeigen.

Damit ein unbeabsichtigtes oder fehlerhaftes Löschen nicht zu schwerwiegenden Unfällen führen kann, wird unmittelbar nach einem Antippen des Löschungseingabefeldes 20 die zugeordnete Bewegungssequenzaufnahme 443, 444, 445, 446, ... für eine vorbestimmte Zeit bevorzugt im Gefahrenanalysemodul 11 weiter analysiert. Da sowohl ein Betätigen des Bestätigungseingabefeldes 28 als auch des Löschungseingabefeldes 20 von der Recheneinheit 29 registriert und verarbeitet wird, kann die weitere Analyse der Bewegungssequenzaufnahme 443, 444, 445, 446, ... durch eine Rückmeldung der Recheneinheit 29 an das Gefahrenanalysemodul 11 veranlasst werden, wie dies durch den strichdreipunktierten Pfeil symbolisch dargestellt ist.

Um die Benutzer 102A, 102B, 102C vor einer bevorstehenden Beeinflussung des Fahrbetriebes F zu warnen und/oder auf ihr Fehlverhalten aufmerksam zu machen, gibt das Interaktionsmodul 21 bei Vorhandensein eines Warnsignals 13A, 13B, 13C eine akustische und/oder optische Warnung über ein Ausgabemodul 121, 122, 123 an die Benutzer 102A, 102B, 102C der Personenförderanlage 61, 71, 81 aus. Das Ausgabemodul 121, 122, 123 ist hierbei im Bereich der Personenförderanlagen 61, 71, 81 angeordnet. Erfindungsgemäss werden vom Steuerungsmodul 31 diejenigen Ausgabemodule 121, 122, 123 angesteuert, die zur Personenförderanlage 61, 71, 81 gehören, der das Warnsignal 13A, 13B, 13C zugeordnet ist. Die optische und/oder akustische Warnung beinhaltet dabei eine mit der kritischen Situation 101A, 101B, 101C korrelierenden Botschaft. Anhand der in der Figur 2 dargestellten kritischen Situationen 101A, 101B, 101C wird dies nachfolgend ausführlicher beschrieben.

Im Falle der kritischen Situation 101A wurde ein «Herunterfallen» vom Gefahrenanalysemodul 11 erkannt und ein entsprechendes Warnsignal 13A generiert. Dessen Codierung 443 veranlasst das Interaktionsmodul 21 dazu, das dem Bewegungserfassungsmodul 43 am nächsten liegende Ausgabemodul 123 auszuwählen. Diesem als Lautsprecher ausgestalteten Ausgabemodul 123 wird beispielsweise die aufgrund der Gewichtung 18Z ausgewählte, akustische Warnung «Achtung Notstopp der Fahrtreppe» über eine kabellose Verbindung 97 gesendet.

Im Falle der kritischen Situation 101B wurde ein «Zutritt in falscher Richtung» vom Gefahrenanalysemodul 11 erkannt und ein entsprechendes Warnsignal 13B generiert. Dessen Codierung 444 veranlasst das Interaktionsmodul 21 dazu, das dem Bewegungserfassungsmodul 44 am nächsten liegende Ausgabemodul 121 auszuwählen. Diesem als Lautsprecher ausgestalteten Ausgabemodul 123 wird beispielsweise die aufgrund der Gewichtung 18X ausgewählte, akustische Warnung «Achtung falscher Zutrittsbereich» über die kabellose Verbindung 97 gesendet.

Im Falle der kritischen Situation 101C wurde ein «verbotenes Betreten mit Einkaufswagen» vom Gefahrenanalysemodul 11 erkannt und ein entsprechendes Warnsignal 13C generiert. Dessen Codierung 446 veranlasst das Interaktionsmodul 21 dazu, das dem Bewegungserfassungsmodul 46 am nächsten liegende Ausgabemodul 122 auszuwählen. Diesem als Bildschirm ausgestalteten Ausgabemodul 122 wird beispielsweise als optische Warnung ein Bild mit durchgestrichenem Einkaufswagen über eine kabellose Verbindung 97 gesendet und auf dem Bildschirm angezeigt. Selbstverständlich kann hierbei auch ein Warnton ausgegeben werden, um die Aufmerksamkeit des Ausgabemoduls zu erhöhen. Als Ausgabemodule 121, 122, 123 können grundsätzlich alle Geräte verwendet werden, die eine akustische und/oder optische Warnung ausgeben können. Besonders effektiv sind hierbei sogenannte Hologramm-Projektoren, mittels denen beispielsweise virtuelle Personen Warnungen und Handbewegungen an die Benutzer 102A, 102B, 102C der Personenförderanlagen 61, 71, 81 abgeben können.

Obwohl anhand der Figuren 1 und 2 unterschiedliche Ausprägungen des Überwachungssystems dargestellt sind, ist es offensichtlich, dass im Wortlaut des Schutzumfanges der beigefügten Ansprüche, ausprägungsgebende Merkmale der einen Ausgestaltung auch in der anderen Ausgestaltung verwendet werden können. So kann beispielsweise die in der Figur 2 dargestellte Gewichtung auch bei einer Überwachungsanlage gemäss der Figur 1 implementiert sein. Des Weiteren kann der in Zusammenhang mit der Figur 1 beschriebene «automatische Wechsel», der im grossen Bildschirmbereich dargestellten Bewegungssequenzaufnahme auch in einem Überwachungssystem gemäss der Figur 2 implementiert sein, wenn dieselbe kritische Situation während ihres zeitlichen Ablaufs durch mehrere Bewegungserfassungsmodule erfasst wird. Selbstverständlich ist es auch möglich, dass das in der Figur 2 dargestellte Löschungseingabefeld und die dazu beschriebenen Funktionen in einem Überwachungssystem gemäss der Figur 1 implementiert sind.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zur Überwachung des Fahrbetriebes (F) einer als Fahrtreppe oder Fahrsteig ausgestalteten Personenförderanlage (51, 61, 71, 81) mittels eines Überwachungssystems (1),
wobei das Überwachungssystem (1) ein Gefahrenanalysemodul (11), ein Interaktionsmodul (21), ein Steuerungsmodul (31) und mindestens ein Bewegungserfassungsmodul (41, ..., 46+2n) aufweist, das auf eine zugeordnete Personenförderanlage (51, 61, 71, 81) gerichtet ist und elektronisch verarbeitbare Bewegungssequenzaufnahmen (441, ..., 446+2n) von Situationen erfassen kann, die sich auf der zugeordneten Personenförderanlage (51, 61, 71, 81) ereignen, **dadurch gekennzeichnet,**
• **dass** das mindestens eine Bewegungserfassungsmodul (41, ..., 46+2n) seine Bewegungssequenzaufnahmen (441, ..., 446+2n) in Echtzeit an das Interaktionsmodul (21) und an das Gefahrenanalysemodul (11) übermittelt;
• **dass** die Bewegungssequenzaufnahmen (441, ..., 446+2n) auf einem Bildschirm (22, 91, ..., 96+2n) des Interaktionsmoduls (21) angezeigt werden;
• **dass** parallel dazu im Gefahrenanalysemodul (11) die Bewegungssequenzaufnahmen (441, ..., 446+2n) mittels Analysealgorithmen auf kritische Situationen (101, ..., 101C) für Benutzer (102, ..., 120C) der Personenförderanlage (51, 61, 71, 81) untersucht werden und sobald eine kritische Situation (101, ..., 101C) erkannt ist, ein Warnsignal (13, ..., 13C) an das Interaktionsmodul (21) gesendet wird;
• **dass** das Interaktionsmodul (21) aufgrund des Warnsignals (13, ..., 13C) die auf dem Bildschirm (22, 91, ..., 96+2n) angezeigte Bewegungssequenzaufnahme (441, ..., 446+2n) optisch und/oder akustisch hervorhebt und auf dem Bildschirm (22, 91, ..., 96+2n) ein Bestätigungseingabefeld (28) generiert;
wobei durch ein manuelles Antippen des Bestätigungseingabefeldes (28) das Interaktionsmodul (21) dazu veranlasst wird, das Warnsignal (13, ..., 13C) an das Steuerungsmodul (31) zu senden und wobei das Steuerungsmodul (31) aufgrund des übermittelten Warnsignals (13, ..., 13C) den Fahrbetrieb (F) der Personenförderanlage (51, 61, 71, 81) beeinflusst.

2. Verfahren nach Anspruch 1, wobei im Gefahrenanalysemodul (11) ein Set möglicher kritischer Situationen gespeichert ist, wobei das Set verschiedene atypische Bewegungsszenarien (15) umfasst, mit denen aus den Bewegungssequenzaufnahmen (441, ..., 446+2n) extrahierte Bewegungsabläufe verglichen werden und bei einer ausreichenden Übereinstimmung eines extrahierten Bewegungsablaufes mit einem atypischen Bewegungsszenario (15) das Vorliegen einer kritische Situation (101, ..., 101C) angenommen und ein Warnsignal (13, ..., 13C) an das Interaktionsmodul (21) gesendet wird.

3. Verfahren nach Anspruch 2, wobei die verschiedenen atypischen Bewegungsszenarien (15) des Sets unterschiedliche Gewichtungen (18X, 18Y, 18Z) im Sinne einer Rangordnung aufweisen.

4. Verfahren nach Anspruch 3, wobei die Beeinflussung des Fahrbetriebes (F) anhand der Gewichtung (18X, 18Y, 18Z) erfolgt, so dass gemäss der Gewichtung (18X, 18Y, 18Z)
• das Steuerungsmodul (31) sofort einen Sicherheitsschalter (33, 35) der betroffenen Personenförderanlage (51, 61, 71, 81) ansteuert und einen Notstopp einleitet, oder
• das Steuerungsmodul (31) mit einer der Gewichtung (18X, 18Y, 18Z) entsprechenden, vordefinierten Verzögerungszeit einen Sicherheitsschalter (33, 35) der betroffenen Personenförderanlage (51, 61, 71, 81) ansteuert und einen Notstopp einleitet, oder
• eine Instruktion (17) an eine Steuerung (59, 73) der betroffenen Personenförderanlage (51, 61, 71, 81) sendet, welche Instruktion (17) die Steuerung (59, 73) veranlasst, die Fahrgeschwindigkeit eines Transportbandes (75) der betroffenen Personenförderanlage (51, 61, 71, 81) nach einem vorgegebenen Verzögerungsprofil zu vermindern.

5. Verfahren nach einem der Ansprüche 1 bis 4, wobei das Überwachungssystem (1) mehrere Bewegungserfassungsmodule (41, ..., 46+2n) aufweist, die Bewegungssequenzaufnahmen (441, ..., 446+2n) von zumindest zwei verschiedenen Personenförderanlagen (51, 61, 71, 81) aufnehmen, wobei jedes der Bewegungserfassungsmodule (41, ..., 46+2n) eine Codierung aufweist und seine Bewegungssequenzaufnahmen (441, ..., 446+2n) mit dieser versieht, wobei das Gefahrenanalysemodul (11) das ausgegebene Warnsignal (13, ..., 13C) mit der entsprechenden Codierung (441, ..., 446+2n) versieht und im Steuerungsmodul (31) die Bewegungserfassungsmodule (41, ..., 46+2n) über ihre Codierungen (441, ..., 446+2n) der durch sie überwachten Personenförderanlage (51, 61, 71, 81) eindeutig zugeordnet sind und wobei das Interaktionsmodul (21) aufgrund eines empfangenen Warnsignals (13, ..., 13C) nur die diesem Warnsignal (13, ..., 13C) zugehörende Bewegungssequenzaufnahme (441, ..., 446+2n) optisch und/oder akustisch hervorhebt und bei einem Antippen des Bestätigungseingabefeldes (28) das mit der Codierung (441, ..., 446+2n) versehene Warnsignal (13, ..., 13C) an das Steuerungsmodul (31) übermittelt.

6. Verfahren nach Anspruch 5 wenn abhängig von Anspruch 2 oder 3, wobei das Gefahrenanalysemodul (11) bei mehreren gleichzeitig erkannten kritischen Situationen (101, 101A, ..., 101C) unmittelbar einander folgend Warnsignale (13, ..., 13C) mit zugehörender Gewichtung (18X, 18Y, 18Z) an das Interaktionsmodul (21) sendet, wobei die Bewegungssequenzaufnahmen (441, ..., 446+2n) anhand ihrer Gewichtung (18X, 18Y, 18Z) nacheinander optisch und/oder akustisch hervorgehoben werden.

7. Verfahren nach einem der Ansprüche 1 bis 6, wobei das Interaktionsmodul (21) aufgrund des Warnsignals (13, ..., 13C) auf dem Bildschirm (22, 91, ..., 96+2n) nebst dem Bestätigungseingabefeld (28) auch ein Löschungseingabefeld (20) generiert und durch ein manuelles Antippen des Löschungseingabefeldes (20) das Interaktionsmodul (21) dazu veranlasst wird, das Warnsignal (13, ..., 13C) zu löschen und die damit verbundene, optisch und/oder akustische Hervorhebung der entsprechenden Bewegungssequenzaufnahme (441, ..., 446+2n) zurückzunehmen.

8. Verfahren nach Anspruch 7, wobei nach einem Antippen des Bestätigungseingabefeldes (28) oder des Löschungseingabefeldes (20) die Darstellung des Bestätigungseingabefeldes (28) und/oder des Löschungseingabefeldes (20) auf dem Bildschirm (22, 91, ..., 96+2n) gelöscht werden.

9. Verfahren nach Anspruch 7, oder 8, wobei unmittelbar nach einem Antippen des Löschungseingabefeldes (20) die zugeordnete Bewegungssequenzaufnahme (441, ..., 446+2n) für eine vorbestimmte Zeit bevorzugt im Gefahrenanalysemodul (11) analysiert wird.

10. Verfahren nach einem der Ansprüche 1 bis 9, wobei der Bildschirm (22) in mehrere kleine Bildschirmbereiche (24, 25, 26) und einen grossen Bildschirmbereich (23) unterteilt ist, wobei für jedes Bewegungserfassungsmodul (41, ..., 46+2n) ein zugeordneter Bildschirmbereich (24, 25, 26) vorhanden ist und bei einem empfangenen Warnsignal (13, ..., 13C) das Interaktionsmodul (21) die dem Warnsignal (13, ..., 13C) zugeordnete Bewegungssequenzaufnahme (441, ..., 446+2n) optisch auf dem grossen Bildschirmbereich (23) anzeigt.

11. Verfahren nach einem der Ansprüche 1 bis 9, wobei das Interaktionsmodul (21) einen zentralen Bildschirm (91) und in dessen unmittelbarer Nähe angeordnet, weitere Bildschirme (92, ..., 96+2n) aufweist, wobei für jedes Bewegungserfassungsmodul (41, ..., 46+2n) ein zugeordneter Bildschirm (92, ..., 96+2n) vorhanden ist und bei einem empfangenen Warnsignal (13, ..., 13C) das Interaktionsmodul (21) die dem Warnsignal (13, ..., 13C) zugeordnete Bewegungssequenzaufnahme (441, ..., 446+2n) optisch auf dem zentralen Bildschirm (91) anzeigt.

12. Verfahren nach einem der Ansprüche 1 bis 11, wobei das Interaktionsmodul (21) bei Vorhandensein eines Warnsignals (13, ..., 13C) eine akustische Warnung über ein Ausgabemodul (121, 123) an die Benutzer (102, ..., 120C) der Personenförderanlage (51, 61, 71, 81) ausgibt, und wobei das Ausgabemodul (121, 123) im Bereich derjenigen Personenförderanlage (51, 61, 71, 81) angeordnet ist, welcher das Warnsignal (13, ..., 13C) zugeordnet ist.

13. Verfahren nach einem der Ansprüche 1 bis 12, wobei das Interaktionsmodul (21) bei Vorhandensein eines Warnsignals (13, ..., 13C) eine optische Warnung über ein Ausgabemodul (122) an die Benutzer (102, ..., 120C) der Personenförderanlage (51, 61, 71, 81) ausgibt, und wobei das Ausgabemodul (122) im Bereich derjenigen Personenförderanlage (51, 61, 71, 81) angeordnet ist, welcher das Warnsignal (13, ..., 13C) zugeordnet ist.

14. Verfahren nach Anspruch 12, oder 13, wobei die optische und/oder akustische Warnung eine mit der kritischen Situation (101, ..., 101C) korrelierende Botschaft beinhaltet.

15. Überwachungssystem (1) zur Durchführung des Verfahrens nach einem der Ansprüche 1 bis 14, **dadurch gekennzeichnet, dass** das Überwachungssystem (1) zumindest das Gefahrenanalysemodul (11), das Interaktionsmodul (21), das Steuerungsmodul (31) und das mindestens eine Bewegungserfassungsmodul (41, ..., 46+2n) aufweist, die über ein Datennetzwerk (3) miteinander in Verbindung stehen.

## Claims

1. Method for monitoring the travel operation (F) of a passenger conveyor system (51, 61, 71, 81) configured as an escalator or moving walkway by means of a monitoring system (1),
the monitoring system (1) comprising a hazard analysis module (11), an interaction module (21), a control module (31) and at least one motion-sensing module (41, ..., 46+2n), which is directed toward an associated passenger conveyor system (51, 61, 71, 81) and can capture electronically processable motion sequence images (441, ..., 446+2n) of situations that occur on the associated passenger conveyor system (51, 61, 71, 81),
**characterized**
• **in that** the at least one motion-sensing module (41, ..., 46+2n) transmits the motion sequence images (441, ..., 446+2n) thereof in real time to the interaction module (21) and to the hazard analysis module (11);
• **in that** the motion sequence images (441, ..., 446+2n) are displayed on a screen (22, 91, ..., 96+2n) of the interaction module (21);
• **in that** at the same time, in the hazard analysis module (11) the motion sequence images (441, ..., 446+2n) are examined for critical situations (101, ..., 101C) for users (102, ..., 120C) of the passenger conveyor system (51, 61, 71, 81) by means of analysis algorithms and, as soon as a critical situation (101, ..., 101C) is detected, a warning signal (13, ..., 13C) is sent to the interaction module (21);
• **and in that** on the basis of the warning signal (13, ..., 13C), the interaction module (21) visually and/or acoustically emphasizes the motion sequence image (441, ..., 446+2n) displayed on the screen (22, 91, ..., 96+2n) and generates a confirmation input field (28) on the screen (22, 91, ..., 96+2n);
a manual tap on the confirmation input field (28) causing the interaction module (21) to send the warning signal (13, ..., 13C) to the control module (31), and the control module (31) influencing the travel operation (F) of the passenger conveyor system (51, 61, 71, 81) on the basis of the transmitted warning signal (13, ..., 13C).

2. Method according to claim 1, wherein a set of possible critical situations is stored in the hazard analysis module (11), wherein the set comprises various atypical motion scenarios (15) with which motion sequences extracted from the motion sequence images (441, ..., 446+2n) are compared, and in the event of sufficient correspondence between an extracted motion sequence and an atypical motion scenario (15), the existence of a critical situation (101, ..., 101C) is assumed and a warning signal (13, ..., 13C) is sent to the interaction module (21).

3. Method according to claim 2, wherein the various atypical motion scenarios (15) in the set have different weightings (18X, 18Y, 18Z) in the sense of a ranking.

4. Method according to claim 3, wherein the travel operation (F) is influenced on the basis of the weighting (18X, 18Y, 18Z) so that, according to the weighting (18X, 18Y, 18Z),
• the control module (31) immediately actuates a safety switch (33, 35) of the affected passenger conveyor system (51, 61, 71, 81) and initiates an emergency stop, or
• the control module (31) actuates a safety switch (33, 35) of the affected passenger conveyor system (51, 61, 71, 81) with a predefined delay time corresponding to the weighting (18X, 18Y, 18Z) and initiates an emergency stop, or
• an instruction (17) is sent to a controller (59, 73) of the affected passenger conveyor system (51, 61, 71, 81), which instruction (17) causes the controller (59, 73) to reduce the travel speed of a conveyor belt (75) of the affected passenger conveyor system (51, 61, 71, 81) according to a specified deceleration profile.

5. Method according to any of claims 1 to 4, wherein the monitoring system (1) has a plurality of motion-sensing modules (41, ..., 46+2n) that record motion sequence images (441, ..., 446+2n) from at least two different passenger conveyor systems (51, 61, 71, 81), wherein each of the motion-sensing modules (41, ..., 46+2n) has a coding and provides the motion sequence images (441, ..., 446+2n) thereof with said coding, wherein the hazard analysis module (11) provides the output warning signal (13, ..., 13C) with the corresponding coding (441, ..., 446+2n) and, in the control module (31), the motion-sensing modules (41, ..., 46+2n) are uniquely assigned to the passenger conveyor system (51, 61, 71, 81) monitored thereby via the coding (441, ..., 446+2n) thereof, and wherein, on the basis of the received warning signal (13, ..., 13C), the interaction module (21) only visually and/or acoustically emphasizes the motion sequence image (441, ..., 446+2n) associated with this warning signal (13, ..., 13C) and, when the confirmation input field (28) is tapped, transmits the warning signal (13, ..., 13C) provided with the coding (441, ..., 446+2n) to the control module (31).

6. Method according to claim 5 when dependent on either claim 2 or claim 3, wherein the hazard analysis module (11) sends warning signals (13, ..., 13C) with the associated weighting (18X, 18Y, 18Z) to the interaction module (21) in immediate succession when a plurality of critical situations (101, 101A, ..., 101C) are detected simultaneously, wherein the motion sequence images (441, ..., 446+2n) are emphasized visually and/or acoustically successively on the basis of the weighting (18X, 18Y, 18Z) thereof.

7. Method according to any of claims 1 to 6, wherein, on the basis of the warning signal (13, ..., 13C), the interaction module (21) also generates a deletion input field (20) in addition to the confirmation input field (28) on the screen (22, 91, ..., 96+2n), and, by manually tapping the deletion input field (20), the interaction module (21) is prompted to cancel the warning signal (13, ..., 13C) and to withdraw the associated visual and/or acoustic emphasis of the corresponding motion sequence image (441, ..., 446+2n).

8. Method according to claim 7, wherein, after the confirmation input field (28) or the deletion input field (20) has been tapped, the display of the confirmation input field (28) and/or the deletion input field (20) on the screen (22, 91, ..., 96+2n) is deleted.

9. Method according to either claim 7 or claim 8, wherein, immediately after the deletion input field (20) has been tapped, the associated motion sequence image (441, ..., 446+2n) is analyzed for a specified time, preferably in the hazard analysis module (11).

10. Method according to any of claims 1 to 9, wherein the screen (22) is divided into a plurality of small screen regions (24, 25, 26) and one large screen region (23), wherein an associated screen region (24, 25, 26) is provided for each motion-sensing module (41, ..., 46+2n) and, when a warning signal (13, ..., 13C) is received, the interaction module (21) visually displays the motion sequence image (441, ..., 446+2n) associated with the warning signal (13, ..., 13C) on the large screen region (23).

11. Method according to any of claims 1 to 9, wherein the interaction module (21) has a central screen (91) and additional screens (92, ..., 96+2n) arranged in the immediate vicinity thereof, wherein an associated screen (92, ..., 96+2n) is provided for each motion-sensing module (41, ..., 46+2n) and, when a warning signal (13, ..., 13C) is received, the interaction module (21) visually displays the motion sequence image (441, ..., 446+2n) associated with the warning signal (13, ..., 13C) on the central screen (91).

12. Method according to any of claims 1 to 11, wherein, in the event of a warning signal (13, ..., 13C), the interaction module (21) outputs an acoustic warning to the users (102, ..., 120C) of the passenger conveyor system (51, 61, 71, 81) via an output module (121, 123), and wherein the output module (121, 123) is arranged in the region of the passenger conveyor system (51, 61, 71, 81) with which the warning signal (13, ..., 13C) is associated.

13. Method according to any of claims 1 to 12, wherein, in the event of a warning signal (13, ..., 13C), the interaction module (21) outputs a visual warning to the users (102, ..., 120C) of the passenger conveyor system (51, 61, 71, 81) via an output module (122), and wherein the output module (122) is arranged in the region of the passenger conveyor system (51, 61, 71, 81) with which the warning signal (13, ..., 13C) is associated.

14. Method according to either claim 12 or claim 13, wherein the visual and/or acoustic warning contains a message correlating with the critical situation (101, ..., 101C).

15. Monitoring system (1) for carrying out the method according to any of claims 1 to 14, **characterized in that** the monitoring system (1) comprises at least the hazard analysis module (11), the interaction module (21), the control module (31) and the at least one motion-sensing module (41, ..., 46+ 2n), which are connected to one another via a data network (3).

## Revendications

1. Procédé permettant la surveillance du fonctionnement en circulation (F) d'une installation de transport de personnes (51, 61, 71, 81) conçue sous forme d'escalier roulant ou de trottoir roulant, au moyen d'un système de surveillance (1),
dans lequel le système de surveillance (1) présente un module d'analyse de danger (11), un module d'interaction (21), un module de commande (31) et au moins un module de détection de mouvement (41, ..., 46+2n) qui est dirigé vers une installation de transport de personnes (51, 61, 71, 81) associée et qui peut détecter des enregistrements de séquences de mouvements (441, ..., 446+2n) pouvant être traités électroniquement de situations qui se produisent sur l'installation de transport de personnes (51, 61, 71, 81) associée, **caractérisé en ce**
• **que** l'au moins un module de détection de mouvement (41, ..., 46+2n) transmet ses enregistrements de séquences de mouvements (441, ..., 446+2n) en temps réel au module d'interaction (21) et au module d'analyse de danger (11) ;
• **que** les enregistrements de séquences de mouvements (441, ..., 446+2n) sont affichés sur un écran (22, 91, ..., 96+2n) du module d'interaction (21) ;
• **que**, en parallèle, dans le module d'analyse de danger (11), les enregistrements de séquences de mouvements (441, ..., 446+2n) sont examinés au moyen d'algorithmes d'analyse à la recherche de situations critiques (101, ..., 101C) pour des utilisateurs (102, ..., 120C) de l'installation de transport de personnes (51, 61, 71, 81) et dès qu'une situation critique (101, ..., 101C) est reconnue, un signal d'avertissement (13, ..., 13C) est envoyé au module d'interaction (21) ;
• **que** le module d'interaction (21), sur la base du signal d'avertissement (13, ..., 13C), met en évidence de manière optique et/ou acoustique l'enregistrement de séquences de mouvements (441, ..., 446+2n) affichée sur l'écran (22, 91, ..., 96+2n) et génère un champ de saisie de confirmation (28) sur l'écran (22, 91, ..., 96+2n) ;
dans lequel, par un effleurement manuel du champ de saisie de confirmation (28), le module d'interaction (21) est amené à envoyer le signal d'avertissement (13, ..., 13C) au module de commande (31) et dans lequel le module de commande (31) influence le fonctionnement en circulation (F) de l'installation de transport de personnes (51, 61, 71, 81) sur la base du signal d'avertissement (13, ..., 13C) transmis.

2. Procédé selon la revendication 1, dans lequel un ensemble de situations critiques possibles est mémorisé dans le module d'analyse de danger (11), dans lequel l'ensemble comprend différents scénarios de mouvements atypiques (15) avec lesquels des évolutions de mouvements extraites à partir des enregistrements de séquences de mouvements (441, ...446+2n) sont comparées et, en cas de concordance suffisante entre une évolution de mouvements extraite et un scénario de mouvements atypique (15), la présence d'une situation critique (101, ..., 101C) est admise et un signal d'avertissement (13, ..., 13C) est envoyé au module d'interaction (21).

3. Procédé selon la revendication 2, dans lequel les différents scénarios de mouvements atypiques (15) de l'ensemble présentent différentes pondérations (18X, 18Y, 18Z) au sens d'une hiérarchie.

4. Procédé selon la revendication 3, dans lequel l'influence sur le fonctionnement en circulation (F) est effectuée à l'aide de la pondération (18X, 18Y, 18Z) de sorte que, selon la pondération (18X, 18Y, 18Z),
• le module de commande (31) commande immédiatement un commutateur de sécurité (33, 35) de l'installation de transport de personnes (51, 61, 71, 81) concernée et déclenche un arrêt d'urgence, ou
• le module de commande (31) commande un commutateur de sécurité (33, 35) de l'installation de transport de personnes (51, 61, 71, 81) concernée avec un temps de décélération prédéfini correspondant à la pondération (18X, 18Y, 18Z) et déclenche un arrêt d'urgence, ou
• une instruction (17) est envoyée à une commande (59, 73) de l'installation de transport de personnes (51, 61, 71, 81) concernée, laquelle instruction (17) amène la commande (59, 73) à réduire la vitesse de circulation d'une bande transporteuse (75) de l'installation de transport de personnes (51, 61, 71, 81) concernée selon un profil de décélération prédéterminé.

5. Procédé selon l'une des revendications 1 à 4, dans lequel le système de surveillance (1) présente plusieurs modules de détection de mouvement (41, ..., 46+2n) qui enregistrent des enregistrements de séquences de mouvements (441, ..., 446+2n) d'au moins deux installations de transport de personnes (51, 61, 71, 81) différentes, dans lequel chacun des modules de détection de mouvement (41, ..., 46+2n) présente une programmation et équipe ses enregistrements de séquences de mouvements (441, ..., 446+2n) de celle-ci, dans lequel le module d'analyse de danger (11) équipe le signal d'avertissement (13, ..., 13C) émis de la programmation (441, ..., 446+2n) correspondante et, dans le module de commande (31), les modules de détection de mouvement (41, ..., 46+2n) sont associés de manière univoque, par l'intermédiaire de leurs programmations (441, ..., 446+2n), à l'installation de transport de personnes (51, 61, 71, 81) qu'ils surveillent, et dans lequel le module d'interaction (21), sur la base d'un signal d'avertissement (13, ..., 13C) reçu, met en évidence de manière optique et/ou acoustique uniquement l'enregistrement de séquences de mouvements (441, ..., 446+2n) associé audit signal d'avertissement (13, ..., 13C) et transmet le signal d'avertissement (13, ..., 13C) équipé de la programmation (441, ..., 446+2n) au module de commande (31) en cas d'effleurement du champ de saisie de confirmation (28).

6. Procédé selon la revendication 5 en cas de dépendance à la revendication 2 ou 3, dans lequel le module d'analyse de danger (11), lorsque plusieurs situations critiques (101, 101A, ..., 101C) sont reconnues simultanément, envoie des signaux d'avertissement (13, ..., 13C) immédiatement consécutifs avec une pondération (18X, 18Y, 18Z) correspondante au module d'interaction (21), dans lequel les enregistrements de séquences de mouvements (441, ..., 446+2n) sont successivement mis en évidence de manière optique et/ou acoustique à l'aide de leur pondération (18X, 18Y, 18Z).

7. Procédé selon l'une des revendications 1 à 6, dans lequel le module d'interaction (21) génère, sur la base du signal d'avertissement (13, ..., 13C) sur l'écran (22, 91, ..., 96+2n), outre le champ de saisie de confirmation (28), également un champ de saisie d'effacement (20) et, par un effleurement manuel du champ de saisie d'effacement (20), le module d'interaction (21) est amené à effacer le signal d'avertissement (13, ..., 13C) et à annuler la mise en évidence optique et/ou acoustique de l'enregistrement de séquences de mouvements (441, ..., 446+2n) correspondante qui y est liée.

8. Procédé selon la revendication 7, dans lequel, après un effleurement du champ de saisie de confirmation (28) ou du champ de saisie d'effacement (20), la représentation du champ de saisie de confirmation (28) et/ou du champ de saisie d'effacement (20) sur l'écran (22, 91, ..., 96+2n) est effacée.

9. Procédé selon la revendication 7, ou 8, dans lequel, immédiatement après un effleurement du champ de saisie d'effacement (20), l'enregistrement de séquences de mouvements (441, ..., 446+2n) associé est analysé pendant une durée prédéfinie, de préférence dans le module d'analyse de danger (11).

10. Procédé selon l'une des revendications 1 à 9, dans lequel l'écran (22) est divisé en plusieurs petites zones d'écran (24, 25, 26) et une grande zone d'écran (23), dans lequel, pour chaque module de détection de mouvement (41, ..., 46+2n), une zone d'écran (24, 25, 26) associée existe et, en cas de réception d'un signal d'avertissement (13, ..., 13C), le module d'interaction (21) affiche de manière optique l'enregistrement de séquences de mouvements (441, ..., 446+2n) associé au signal d'avertissement (13, ..., 13C) sur la grande zone d'écran (23).

11. Procédé selon l'une des revendications 1 à 9, dans lequel le module d'interaction (21) présente un écran central (91) et d'autres écrans (92, ..., 96+2n) disposés à proximité immédiate de celui-ci, dans lequel un écran (92, ..., 96+2n) associé existe pour chaque module de détection de mouvement (41, ..., 46+2n) et, en cas de réception d'un signal d'avertissement (13, ..., 13C), le module d'interaction (21) affiche de manière optique l'enregistrement de séquences de mouvements (441, ..., 446+2n) associé au signal d'avertissement (13, ..., 13C) sur l'écran central (91).

12. Procédé selon l'une des revendications 1 à 11, dans lequel le module d'interaction (21), en présence d'un signal d'avertissement (13, ..., 13C), émet un avertissement acoustique aux utilisateurs (102, ..., 120C) de l'installation de transport de personnes (51, 61, 71, 81) par l'intermédiaire d'un module de sortie (121, 123), et dans lequel le module de sortie (121, 123) est disposé dans la zone de l'installation de transport de personnes (51, 61, 71, 81) à laquelle est associé le signal d'avertissement (13, ..., 13C).

13. Procédé selon l'une des revendications 1 à 12, dans lequel le module d'interaction (21), en présence d'un signal d'avertissement (13, ..., 13C), émet un avertissement optique aux utilisateurs (102, ..., 120C) de l'installation de transport de personnes (51, 61, 71, 81) par l'intermédiaire d'un module de sortie (122), et dans lequel le module de sortie (122) est disposé dans la zone de l'installation de transport de personnes (51, 61, 71, 81) à laquelle est associé le signal d'avertissement (13, ..., 13C).

14. Procédé selon la revendication 12, ou 13, dans lequel l'avertissement optique et/ou acoustique contient un message en corrélation avec la situation critique (101, ..., 101C).

15. Système de surveillance (1) permettant la mise en œuvre du procédé selon l'une des revendications 1 à 14, **caractérisé en ce que** le système de surveillance (1) présente au moins le module d'analyse de danger (11), le module d'interaction (21), le module de commande (31) et l'au moins un module de détection de mouvement (41, ..., 46+2n), lesquels sont connectés entre eux par l'intermédiaire d'un réseau de données (3).
